# EUROPÄISCHE PATENTANMELDUNG

(11) **EP 0 767 091 A1**
(43) Veröffentlichungstag der Anmeldung: **09.04.1997**
(21) Anmeldenummer: 95115719.7
(22) Anmeldetag: 05.10.1995
(51) Int. Cl.: B60R 25/04, E05B 49/00

(54) **Diebstahlschutzvorrichtung für ein Kraftfahrzeug**

(71) Anmelder: SIEMENS AKTIENGESELLSCHAFT, 80333 München (DE)
(72) Erfinder: Bachhuber, Anton, D-84085 Langquaid (DE)

(57) **Zusammenfassung**

Eine Sende- und Empfangseinheit (1) ist beweglich im Fahrzeuginneren angeordnet. Zum Starten des Fahrzeugs wird die Sende- und Empfangseinheit (1) in die Nähe eines tragbaren Transponders (4) gebracht, wodurch ein Frage-Antwort-Dialog zwischen dem Transponder (4) und der Sende- und Empfangseinheit (1) gestartet wird. Nach erfolgreichem Dialog wird eine Wegfahrsperre (9) freigegeben.

## Beschreibung

Die Erfindung betrifft eine Diebstahlschutzvorrichtung für ein Kraftfahrzeug zum Freigeben einer Wegfahrsperre.

Eine bekannte Diebstahlschutzvorrichtung (DE 43 29 697 A1) weist einen auf einer Chipkarte integrierten Transponder und eine am Zündschloß angeordnete Sende- und Empfangseinheit auf. Sobald ein Zündschalter betätigt wird, wird ein Frage-Antwort-Dialog ausgelöst, der bei Berechtigung des Transponders zu einem Freigeben der Wegfahrsperre führt.

Bei einer solchen Diebstahlschutzvorrichtung kann jedoch die Chipkarte mit dem Transponder recht weit von dem Zündschloß entfernt sein, so daß ein recht starkes elektromagnetisches Feld erzeugt werden muß, um den Transponder anzusprechen.

Eine weitere bekannte Diebstahlschutzvorrichtung (DE 32 06 434 A1) weist einen Sender auf, der in eine Aufnahmevorrichtung im Armaturenbrett gesteckt wird. Nach Betätigen eines Schalters des Senders wird ein Codesignal zu einem Empfänger in der Aufnahmevorrichtung ausgesendet. Bei berechtigtem Codesignal wird die Wegfahrsperre freigegeben.

Bei dieser Diebstahlschutzvorrichtung muß der Sender in die Aufnahmevorrichtung eingeführt sein, damit das Codesignal übertragen werden kann.

Der Erfindung liegt das Problem zugrunde, eine Diebstahlschutzvorrichtung zu schaffen, die einfach und sicher zu bedienen ist.

Dieses Problem wird erfindungsgemäß durch die Merkmale von Patentanspruch 1 gelöst.

Dabei ist eine Sende- und Empfangseinheit beweglich in dem Fahrzeuginneren angeordnet. Die Sende- und Empfangseinheit wird in die Nähe eines tragbaren Transponders gebracht, damit ein Frage-Antwort-Dialog zwischen den beiden stattfinden kann. Somit ist es nicht mehr notwendig, den Transponder aus seiner Tasche zu holen und ihn in irgend eine Aufnahmevorrichtung einzuführen.

Vorteilhafte Ausgestaltungen der Erfindung sind in den Unteransprüchen gekennzeichnet.

Ein Ausführungsbeispiel der Erfindung wird im folgenden anhand der schematischen Zeichnung näher erläutert.

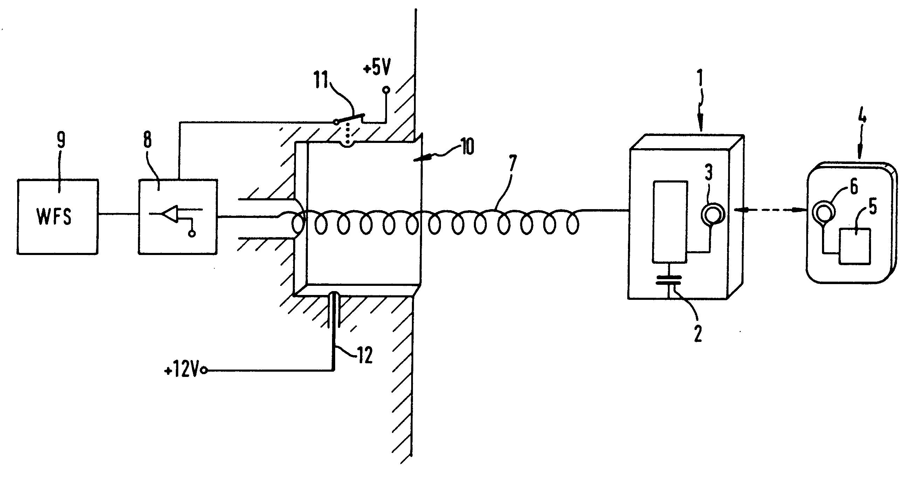

Die Figur zeigt ein Blockschaltbild der erfindungsgemäßen Diebstahlschutzvorrichtung. Die Diebstahlschutzvorrichtung weist eine Sende- und Empfangseinheit 1, die beweglich in dem Fahrzeuginneren angeordnet ist. Die Sende- und Empfangseinheit 1 weist einen Energiespeicher 2 auf, der die Energie zum Senden und Empfangen von Signalen bereitstellt. Des weiteren weist die Sende- und Empfangseinheit 1 eine Sende- und Empfangsantenne 3 beispielsweise in Form einer Spule auf, über die ein Aufforderungssignal an einen tragbaren Transponder 4 gesendet wird.

Der Transponder 4 weist eine Codeerzeugungsschaltung 5 auf, die infolge des Empfangs des Aufforderungssignal ein Antwortcodesignal erzeugt und dieses über eine spulenförmige Antenne 6 zu der Sende- und Empfangseinheit 1 zurücksendet.

Die Sende- und Empfangseinheit 1 sendet das empfangene Antwortcodesignal über ein an sie angeschlossenes Kabel 7 zu einer Auswerteeinheit 8. Dort wird das Antwortcodesignal mit einem gespeicherten oder erzeugten Sollcodesignal verglichen. Bei Übereinstimmung der beiden Signale wird ein Freigabesignal erzeugt, durch das eine Wegfahrsperre 9 gelöst wird. Somit kann der Motor gestartet und das Fahrzeug bewegt werden.

Bei der erfindungsgemäßen Diebstahlschutzvorrichtung wird die Sende- und Empfangseinheit 1 zum Starten des Kraftfahrzeugs in die Nähe des Transponders 4 gebracht, der sich in einer Hand-, Hemd- oder Jackentasche des Benutzers befinden kann. Da der Frage-Antwort-Dialog zwischen dem Transponder 4 und der Sende- und Empfangseinheit 1 in Form induktiv übertragener Signale abläuft (in der Figur durch den Doppelpfeil gekennzeichnet), haben die übertragenen Signale nur eine geringe Reichweite von wenigen Zentimetern. Somit wird eine gesundheitliche Einwirkungen auf den Benutzer infolge der elektromagnetischen Strahlung gemindert.

Die Sende- und Empfangseinheit 1 befindet sich im Ruhezustand in einer Aufnahmevorrichtung 10, die in Griffweite des Benutzers in der Mittelkonsole oder am Armaturenbrett des Fahrzeugs angeordnet sein kann. Über eine aufrollbare Leitung oder ein flexibles Kabel 7 ist die Sende- und Empfangseinheit 1 mit der Auswerteeinheit 8 verbunden, die sich in der Nähe der Aufnahmevorrichtung 10 im Kraftfahrzeug befindet.

Die Aufnahmevorrichtung 10 kann einen Schalter 11 aufweisen, der bei Entnehmen der Sende- und Empfangseinheit 1 aus der Aufnahmevorrichtung 10 automatisch geschlossen wird, so daß dadurch die Sende- und Empfangseinheit 1 über die Auswerteeinheit 8 angewiesen wird, das Aufforderungssignal auszusenden. Das Aufforderungsignal kann danach auch mehrfach ausgesendet werden, bis die Sende- und Empfangseinheit 1 zu dem Transponder 4 geführt wird und dieser sicher das Aufforderungssignal empfängt.

Die Auswerteeinheit 8 erwartet nach Aussenden des Aufforderungssignals das von dem Transponder 4 zurückgesendete Antwortcodesignal. Nachdem die Sende- und Empfangseinheit 1 wieder in die Aufnahmevorrichtung 10 zurückgesteckt wurde, kann der Dialog zwischen dem Transponder 4 und der Sende- und Empfangseinheit 1 beendet werden.

Der Schalter 11 kann als Berührungsschalter, als Tastschalter, als Sensor oder auf sonstige, funktionell gleichwertige Weise ausgebildet sein. Für die Erfindung ist es wesentlich, daß durch das Schalten des Schalters 11 das Aufforderungssignal ausgelöst wird.

Statt des Schalters 11 in der Aufnahmevorrichtung 10, kann die Sende- und Empfangseinheit 1 einen nicht dargestellten Tastschalter aufweisen. Wenn die Sende- und Empfangseinheit 1 in die Nähe des Transponders 4 gebracht wird und der Tastschalter betätigt wird, wird das Aufforderungssignal erzeugt und über die Sende- und Empfangsantenne 3 ausgesendet. Das Aufforderungssignal wird dann auch sicher von dem Transponder 4 empfangen, da die Sende- und Empfangseinheit 1 nahe bei dem Transponder 4 ist. Daher wird auch das in dem Transponder 4 erzeugte Antwortcodesignal sicher von der Sende- und Empfangseinheit 1 empfangen und an die Auswerteeinheit weitergeleitet.

Der Tastschalter in der Sende- und Empfangseinheit 1 kann auch durch ein Mikrophon und eine Spracherkennungseinheit ersetzt sein. Wenn der Benutzer ein Startwort spricht, so wird der Dialog zwischen dem Transponder 4 und der Sende- und Empfangseinheit 1 ausgelöst.

Der Transponder 4 kann zum Entriegeln der Fahrzeugtüren verwendet werden. In diesem Fall kann das Antwortcodesignal für die Wegfahrsperre 9 auch nach dem Entriegeln für eine vorbestimmte Zeitdauer intermittierend ausgesendet werden. Dann wird kein Schalter zum Auslösen des Dialogs zwischen dem Transponder 4 und der Sende- und Empfangseinheit 8 benötigt.

In der Aufnahmevorrichtung 10 kann auch ein Energieversorgungsanschluß 12 angeordnet sein, der den Energiespeicher 2 in der Sende- und Empfangseinheit 1 dann auflädt, wenn sich die Sende- und Empfangseinheit 1 in der Aufnahmevorrichtung 10 befindet. Der Energieversorgungsanschluß 12 kann als galvanischer Kontakt ausgebildet sein. Ebenso kann eine nicht dargestellte Spule in der Seitenwand der Aufnahmevorrichtung 10 induktiv Energie zu der Sende- und Empfangsantenne 3 übertragen, die dann den Energiespeicher 2 nachlädt.

Der Energiespeicher 2 kann ein Kondensator, ein wiederaufladbarer Akkumulator oder eine sonstige, funktionell gleichwertige Vorrichtung sein. Die Energie des Energiespeichers 2 reicht zumindest aus, daß das Aufforderungssignal mehrere Male ausgesendet und das Antwortcodesignal sicher empfangen werden kann.

Das Antwortcodesignal kann über das flexible Kabel 7 oder auch drahtlos per Funk, optische oder akustische Signale zu der Auswerteeinheit 8 übertragen werden. Die drahtlose Übertragung kann dann stattfinden, wenn sich die Sende- und Empfangseinheit 1 in der Aufnahmevorrichtung 10 befindet. Dadurch wird wenig Energie in der Sende- und Empfangseinheit 1 verbraucht, da das Antwortcodesignal mit geringer Leistung ausgestrahlt werden kann.

Die Übertragung des Aufforderungssignals und des Antwortcodesignals findet induktiv bei einer Frequenz von etwa 125 kHz statt. Andere Übertragungsarten und -frequenzen sind selbstverständlich auch möglich. So kann das Aufforderungssignal induktiv und das Antwortcodesignal als HF-Signal übertragen werden. Optische oder akustische Signale sind ebenso möglich.

Der Transponder 4 kann auch so ausgebildet sein, daß er das Antwortcodesignal direkt zu der Auswerteeinheit 8 sendet, ohne den Umweg über die Sende- und Empfangseinheit 1. Hierzu ist es vorteilhaft, wenn der Transponder 4 das Antwortcodesignal als HF-Signal aussendet.

Es ist von Vorteil, wenn die Sende- und Empfangseinheit 1 - zwar beweglich - aber dennoch dauerhaft mit der Aufnahmevorrichtung 10 verbunden ist, damit die Sende- und Empfangseinheit 1 nicht verloren geht.

Die erfindungsgemäße Diebstahlschutzvorrichtung hat außerdem den Vorteil, daß ein Schlüssel oder eine Chipkarte mit dem Transponder 4 nicht aus der Hand-, Jacken- oder Hemdtasche umständlich hervorgeholt werden muß, um das Kraftfahrzeug zu starten.

Der Transponder 4 benötigt keine eigene Energieversorgungseinheit, da er die Energie zum Erzeugen und Senden des Antwortcodesignals dem Aufforderungssignal entnimmt.

Zum Erzeugen des Aufforderungssignals und des Antwortcodesignals können ein sogenannter Festcode oder ein sogenannter Wechselcode verwendet werden. Bei einem Festcode ist das Signal bei jedem Aussenden gleich. Bei einem Wechselcode werden die Signale vor oder nach jedem Aussenden mit Hilfe eines mathematischen Algorithmus geändert. Dabei können auch kryptographische Verfahren verwendet werden.

Unter einer Wegfahrsperre ist jede Vorrichtung zu verstehen, durch die ein Starten und Wegfahren des Kraftfahrzeugs verhindert werden kann. So kann die Funktion einer Wegfahrsperre in einem Motorsteuergerät enthalten sein. Nur bei berechtigtem Antwortcodesignal, durch das das Freigabesignal erzeugt wird, wird das Motorsteuergerät freigegeben.

## Patentansprüche

1. Diebstahlschutzvorrichtung für ein Kraftfahrzeug mit
- einem tragbaren Transponder (4), der nach Empfang eines Aufforderungssignals ein Codesignal aussendet, und mit
- einer im Kraftfahrzeug angeordneten Sende- und Empfangseinheit (1), die das Aufforderungssignal aussendet und/oder das Codesignal empfängt und das Codesignal an eine Auswerteeinheit (8) weiterleitet, wo das Codesignal mit einem Sollcodesignal verglichen und bei Übereinstimmung ein Freigabesignal an ein Sicherheitsaggregat (9) gesendet wird,
**dadurch gekennzeichnet, daß** die Sende- und Empfangseinheit (1) beweglich in dem Fahrzeuginneren angeordnet ist und zum Aussenden des Aufforderungssignals oder zum Empfang des Codesignals in die Nähe des Transponders (4) gebracht wird.

2. Diebstahlschutzvorrichtung nach Anspruch 1, dadurch gekennzeichnet, daß die Sende- und Empfangseinheit (1) mit der Auswerteeinheit (8) über ein flexibles Kabel (7) verbunden ist.

3. Diebstahlschutzvorrichtung nach Anspruch 1, dadurch gekennzeichnet, daß die Übertragung der Signale zwischen der Sende- und Empfangseinheit (1) und der Auswerteeinheit (8) drahtlos erfolgt.

4. Diebstahlschutzvorrichtung nach Anspruch 3, dadurch gekennzeichnet, daß die Sende- und Empfangseinheit (1) an der Mittelkonsole oder am Armaturenbrett des Kraftfahrzeugs über eine flexible Verbindung befestigt ist.

5. Diebstahlschutzvorrichtung nach Anspruch 1, dadurch gekennzeichnet, daß eine Aufnahmevorrichtung (10) für den Fahrer in Griffweite im Fahrzeuginneren angeordnet ist, wobei die Sende- und Empfangseinheit (1) zwischenzeitlich in der Aufnahmevorrichtung (10) abgelegt ist.

6. Diebstahlschutzvorrichtung nach Anspruch 5, dadurch gekennzeichnet, daß ein Schalter (11) in der Aufnahmevorrichtung (10) angeordnet ist, durch den beim Entnehmen der Sende- und Empfangseinheit (1) aus der Aufnahmevorrichtung ein Aufforderungssignal erzeugt und zumindest einmal ausgesendet wird.

7. Diebstahlschutzvorrichtung nach Anspruch 1, dadurch gekennzeichnet, daß die Sende- und Empfangseinheit (1) einen Schalter aufweist, bei dessen Betätigen ein Aufforderungssignal erzeugt und zumindest einmal ausgesendet wird.

8. Diebstahlschutzvorrichtung nach Anspruch 5, dadurch gekennzeichnet, daß die Sende- und Empfangseinheit (1) einen Energiespeicher (2) aufweist, der solange wieder aufgeladen wird, wie die Sende- und Empfangseinheit (1) in der Aufnahmevorrichtung (10) angeordnet ist.
